# EUROPEAN PATENT APPLICATION

(11) **EP 4 832 217 A1**
(43) Date of publication of application: **28.10.2026**
(21) Application number: 25851738.2
(22) Date of filing: 07.08.2025
(51) Int. Cl.: H01M 50/367, H01M 50/317, H01M 50/383

(54) **BATTERY PACK HAVING FLAME FLOW PATH DESIGN**

(30) Priority: 07.08.2024 KR 20240105439
(71) Applicant: LG Energy Solution, Ltd., Seoul 07335 (KR)
(72) Inventor: KIM, Jae Sang, Daejeon 34122 (KR); LEE, Hyun Jong, Daejeon 34122 (KR)
(74) Representative: Plasseraud IP
(86) International application number: PCT/KR2025/011881
(87) International publication number: WO 2026/035052

(57) **Abstract**

A battery pack having a flame flow path design is provided. The battery pack includes a pack body, a base cover, a pressure valve, and a handle. The base cover is disposed on the pack body, and has a hole communicating with an inside of the pack body. A flow path is connected to the hole. The pressure valve is installed in the hole of the base cover. The handle is disposed on the base cover and covers the pressure valve.

## Description

### Cross-References to Related Applications

The present application is a national phase entry under 35 U.S.C. § 371 of International Application No. PCT/KR2025/011881 filed on August 7, 2025, which claims priority from Korean Patent Application No. 10-2024-0105439, filed on August 7, 2024, all of which are incorporated by reference herein.

### [Technical Field]

The present disclosure relates to a battery pack, and more particularly, relates to a battery pack having a flame flow path design.

### [Background]

When a cell explodes due to an internal issue in a battery pack, flames due to explosion can be exposed to the outside of the battery pack, which is dangerous.

### [Summary]

### [Technical Problem]

Therefore, it is an object of the present disclosure to provide a battery pack preventing direct flames from being exposed to the outside of the battery pack upon internal cell ignition.

### [Technical Solution]

To achieve the above-described object, the present disclosure provides a battery pack comprising: a pack body; a base cover (top base) disposed at one end of the pack body, and having a hole communicating with an inside of the pack body and a flow path connected to the hole; a pressure valve installed in the hole of the base cover; and a handle disposed on the base cover to surround the pressure valve.

In the present disclosure, the flow path may comprise a central flow path formed around the hole, and a plurality of branch flow paths extending from the central flow path to an edge of the base cover.

In the present disclosure, the plurality of branch flow paths may be disposed apart at a predetermined interval.

In the present disclosure, each of the branch flow path may be arranged such that a cross-sectional area of the branch flow path increases along a direction toward the edge of the base cover.

In the present disclosure, the plurality of branch flow paths may be disposed such that an interval between the plurality of branch flow paths increases from the central flow path toward the edge of the base cover.

In the present disclosure, the flow path may be formed in a groove shape on an upper surface of the base cover, an upper portion of the flow path may be sealed while the base cover being covered by the handle, and an outlet for the flow path may be formed at an edge of the handle.

The battery pack according to the present disclosure may further comprise a handle cover disposed to surround the handle and the outlet.

In the present disclosure, the pressure valve may comprise: a bottom member installed in the hole, a cap member disposed above the bottom member, a porous membrane disposed between the bottom member and the cap member, and an O-ring fitted around a circumference of the bottom member.

A battery pack according to another aspect of the present disclosure may comprise: a pack body; a base cover mounted at one end of the pack body, and having a hole communicating with an inside of the pack body and a flow path connected to the hole; a pressure valve installed in the hole of the base cover and arranged to open when a pressure inside the pack body is more than or equal to a predetermined pressure; and a handle mounted on the base cover to surround the pressure valve and the flow path.

In the present disclosure, when the pressure valve opens, flames ejected toward the base cover may be guided toward the flow path of the base cover.

A battery pack according to another aspect of the present disclosure may comprise: a pack body; a base cover mounted at one end of the pack body, and having a hole communicating with an inside of the pack body and a flow path connected to the hole; a pressure valve installed in the hole of the base cover and arranged to open when a pressure inside the pack body is more than or equal to a predetermined pressure; a handle surrounding the pressure valve, surrounding a partial region of the flow path, and forming an outlet of the flow path; and a handle cover disposed to surround the handle and the outlet.

Any combination between all claims, any combination between all elements, and any combination between all aspects are possible.

### [Advantageous Effects]

According to the present disclosure, upon internal cell ignition of a battery pack, it is possible to prevent direct flames from being exposed to the outside of the battery pack by interfering a direction of flame progression through a flow path structure, and specifically, it is possible to prevent flames from being propagated to the outside of the battery pack through a design limiting a flow path through which flames can escape.

### [Description of Drawings]

FIG. 1 is a perspective view illustrating a conventional battery pack.
FIG. 2 is a partial perspective view illustrating an upper portion of a conventional battery pack.
FIG. 3 is a perspective view illustrating a battery pack according to the present disclosure.
FIG. 4 is an exploded perspective view of an upper portion in the entire battery pack according to the present disclosure.
FIG. 5 is an enlarged perspective view illustrating a flow path structure of a base cover according to the present disclosure.
FIG. 6 is an enlarged perspective view illustrating a pressure valve installed on a base cover according to the present disclosure.
FIG. 7 is an enlarged perspective view illustrating a handle mounted on a base cover according to the present disclosure.
FIG. 8 is an enlarged perspective view illustrating a handle cover mounted on a handle according to the present disclosure.
FIG. 9 is a cross-sectional view of a pressure valve according to the present disclosure.

### [Detailed Description]

Hereinafter, the present disclosure will be described in detail with reference to the accompanying drawings.

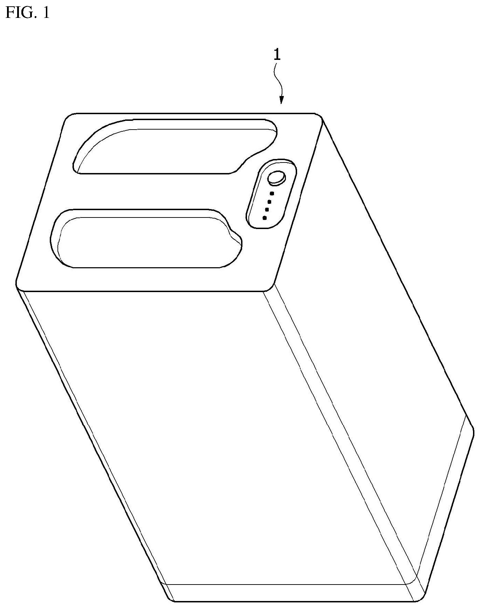

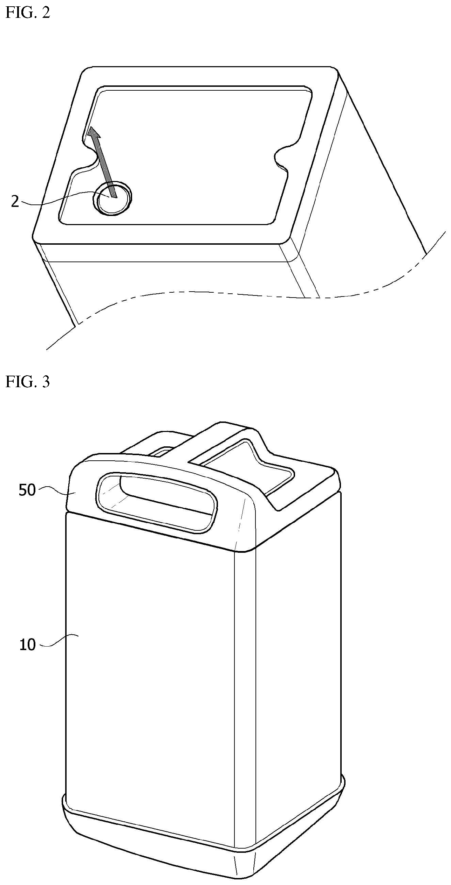

Referring to FIGs. 1 and 2, conventionally, a pressure valve (decompression valve) (2) for internal and external pressure control of a battery pack (1) has been exposed to the outside of the battery pack (1), so that upon explosion and ignition of a cell due to an internal issue, high-pressure flames are ejected upward through the relevant pressure valve (2). As such, conventionally, as the pressure (decompression) valve (2) is positioned on the exterior appearance of the battery pack (1), it is dangerous because the flames can be exposed to the outside of the battery pack (1) upon internal cell ignition.

The present disclosure relates to a flame flow path design for a battery pack, and more particularly, relates to the positioning and flow path design of a pressure (decompression) valve. The present disclosure is characterized by a structure in which upon flame occurrence inside the pack, it prevents flames from being exposed to the outside of the battery pack through the flame path design, while the pressure (decompression) valve is positioned inside the battery pack.

Referring to FIGs. 3 to 9, the battery pack according to the present disclosure may be composed of a pack body (10), a base cover (20), a pressure valve (30), a handle (40), a handle cover (50), and the like, and other components may be added in addition to the above-described components as needed.

The pack body (10) is a body occupying most of the volume of the battery pack, which may comprise a case and an accommodation space formed inside the case. The case is a member forming the exterior appearance of the pack body (10), wherein as illustrated, it may be configured as a near cuboid with a high height, but its shape and size, and the like may be appropriately set without special limitation. The accommodation space, which is an internal space, may occupy most of the volume of the pack body (10) (at least half or more), a plurality of battery modules may be accommodated (embedded) in the accommodation space, and each battery module may comprise a plurality of battery cells. The type of battery may be a pouch-type battery, a cylindrical battery, or a rectangular battery. Particularly, the battery pack according to the present disclosure may be used in lightweight or small electric vehicles (EVs), such as electric motorcycles and electric bicycles, and the like.

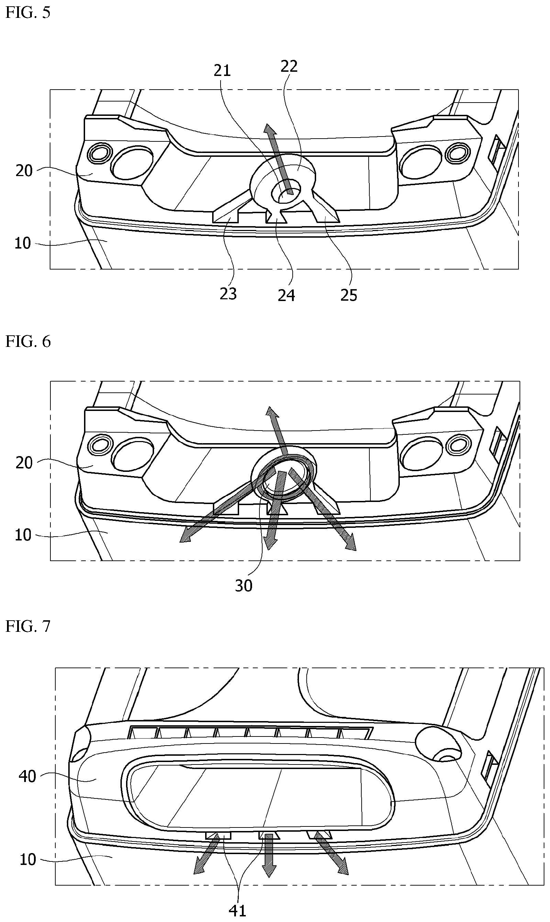

The base cover (20) may be a member disposed on the pack body (10) to close the upper end of the pack body (10). The base cover (20) may be configured in a rough plate shape and may be provided with holes, grooves, protrusions, steps, and the like for coupling with other members, and the like. Referring to FIG. 5, the base cover (20) may be provided with a hole (21) and flow paths (22, 23, 24, 25) connected to the hole (21). The hole (21) is a hole penetrating the base cover (20) to communicate with the internal space of the pack body (10), wherein flames generated inside the pack body (10) may be ejected through the hole (21). As illustrated, one hole (21) may be formed in a circular shape (based on a plan view) near one edge of the base cover (20), but its position, shape, number, size, and then like may be appropriately set without special limitation.

Referring to FIG. 5, the flow paths (22, 23, 24, 25) may include a central flow path (22) and branch flow paths (23, 24, 25). The central flow path (22) may be formed to surround the hole (21) around the hole (21), and may also be formed in a groove shape on an upper surface of the base cover (20). The central flow path (22) may be formed in a shape such as a circular ring (based on a plan view), and may be formed depending on the position, shape, number, and size, and the like of the hole (21).

Referring to FIG. 5, the branch flow paths (23, 24, 25) may extend from the central flow path (22) to an edge (terminal) of the base cover (20), and may also be formed in a groove shape on the upper surface of the base cover (20). The branch flow paths (23, 24, 25) may be composed of a plurality of branch flow paths branching from one central flow path (22), and specifically, may include a first branch flow path (23), a second branch flow path (24), a third branch flow path (25), and the like. At this time, the plurality of branch flow paths (23, 24, 25) may be disposed so that intervals between the plurality of branch flow paths (23, 24, 25) spread out from the central flow path (22) toward the edge of the base cover (20). Specifically, based on the second branch flow path (24) disposed in the center, the first branch flow path (23) and the third branch flow path (25) on both sides of the second branch flow path (24) may be disposed to spread out toward the edge of the base cover (20). Accordingly, the flames may spread widely to be dispersed, without being concentrated in one place.

Referring to FIG. 5, the branch flow paths (23, 24, 25) may be shortly formed in a straight-line shape, as illustrated, but a curved line shape or a combination of straight- and curved-line shapes is also possible, and may also be formed in a long shape, and a complex passage structure, for example, in a zigzag shape, is also possible. The cross-section (longitudinal section) of the branch flow paths (23, 24, 25) may be rectangular, as illustrated, but other polygons, circles, ovals, and the like are also possible, and furthermore, areas of cross-sections of the branch flow paths (23, 24, 25) may be expanded intermittently or continuously toward the edge of the base cover (20), as illustrated. However, the number, arrangement, interval, shape, length, cross-sectional shape, and the like of the branch flow paths (23, 24, 25) may be appropriately set in addition to those as illustrated.

Meanwhile, referring to FIG. 5, the flow paths (22, 23, 24, 25) are formed in a groove shape on the upper surface of the base cover (20), so that upper portions of the flow paths (22, 23, 24, 25) are opened, wherein the upper portions (specifically, the tops) of the opened flow paths (22, 23, 24, 25) are sealed while the base cover (20) is covered with the handle (40), whereby the sealed flow paths (22, 23, 24, 25) may be completed. That is, side surfaces and lower surfaces of the flow paths (22, 23, 24, 25) may be formed on the base cover (20), and the upper surfaces of the flow paths (22, 23, 24, 25) may be provided by the handle (40) (see FIG. 7).

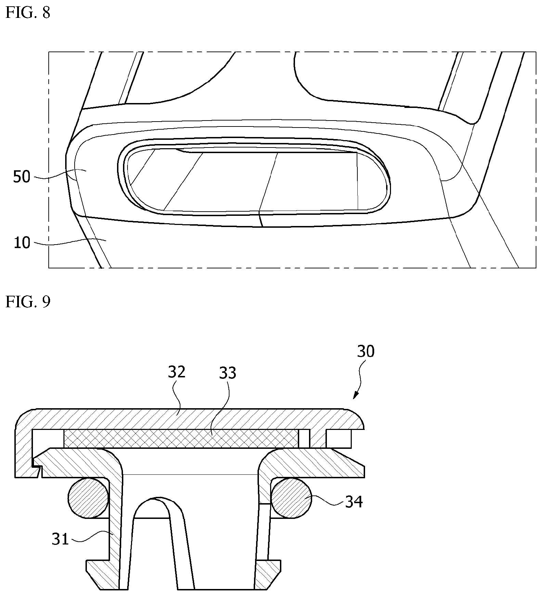

The pressure valve (30) may be installed in the hole (21) of the base cover (20) to adjust the pressure of the battery pack. Referring to FIG. 9, the pressure valve (30) may be composed of a bottom member (31), a cap member (32), a porous membrane (33), an O-ring (34), and the like. The bottom member (31) is a hole-coupling member and a membrane-mounting member installed in the hole (21), which is configured approximately in a T-shape, whereby its lower portion may be inserted into the hole (21), and horizontal protruding portions on both sides of the top may be seated and supported on the lower surface of the central flow path (22). The cap member (32) is a cover member disposed on the bottom member (31) and coupled with the top of the bottom member (31), which may cover and protect the porous membrane (33). The porous membrane (33) is a porous material disposed between the bottom member (31) and the cap member (32), which may substantially perform the function of adjusting the pressure. The O-ring (34) is a sealing member fitted around a circumference of the bottom member (31), which may improve sealing performance upon insertion into the hole (21).

The bottom member (31) and the cap member (32) of the pressure valve (30) may be composed of polybutylene terephthalate (PBT) and 30±10 wt% glass fiber (GF), and the like to improve strength, hardness, and heat resistance, and the like. The porous membrane (33) may be composed of polytetrafluoroethylene (PTFE), and the like to improve heat resistance, and chemical resistance, and the like. The O-ring (34) may be composed of silicone rubber having a Shore A hardness of 70±20, and the like. The pressure valve (30) may be opened when a pressure inside the pack body (10) is more than or equal to a predetermined pressure.

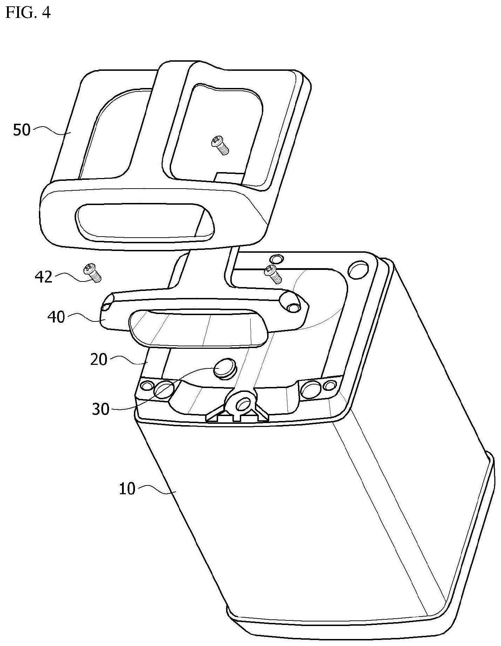

The handle (40) is a member facilitating transportation and handling of the battery pack, which may be roughly configured in a T-shape as illustrated in FIG. 4, but its shape and size, and the like may be appropriately set without special limitation. The handle (40) may be disposed on the base cover (20) and may be fixed to the base cover (20) using a fixing member (42) such as screws or bolts as illustrated in FIG. 4.

Referring to FIG. 7, the handle (40) may be provided with a grip member spaced apart from the base cover (20) so that the handle (40) is holdable by the hand or the like. Furthermore, the handle (40) may be provided with a ring member which is orthogonal to the grip member, extends in the height direction, and has an opening on the inside, in an edge region where the flow paths (22, 23, 24, 25) are located. The ring member may be provided with a plate-shaped cover disposed below the opening, and covering the flow paths (22, 23, 24, 25) while being in close contact with the upper surface of the base cover (20). As described above, by covering the upper portions (tops) of the opened flow paths (22, 23, 24, 25) of the base cover (20) with the cover of the ring member of the handle (40), an outlet (41) of the flow paths (22, 23, 24, 25) may be formed at an edge of the handle (40). The outlet (41) may be a plurality of outlets, which may be formed by corresponding to the branch flow paths (23, 24, 25).

The handle cover (50) is a cover member disposed on the handle (40), which may be fixed while covering border portions of the handle (40) and the base cover (20), as illustrated in FIG. 4, and its shape and size, and the like may be appropriately set without special limitation. Referring to FIG. 8, while covered by the handle cover (50), the outlet (41) of the handle (40) is sealed or not exposed to the outside, so that the flames may not be transmitted to the outside upon battery ignition. The handle cover (50) may be manufactured from a material with excellent heat resistance and flame retardancy, and the like to block or withstand the flames. Furthermore, the handle cover (50) has a sealed internal space, thereby confining the flames enabling to be leaked from the outlet (41) in the internal space, whereby it is possible to block the flames from being transmitted to the outside of the handle cover (50).

Referring to FIG. 5, upon battery ignition, the flames can be ejected upward through the hole (21) of the base cover (20) as in the arrow direction.

Referring to FIG. 6, the flames passing through the hole (21) can move upward and along the central flow path (22) and the plurality of branch flow paths (23, 24, 25), as indicated by the arrows, through the opened pressure valve (30). That is, the movement of the flames can be guided by the flow paths (23, 24, 25).

Referring to FIG. 7, as the flow paths (22, 23, 24, 25) of the base cover (20) are covered by the handle (40), the flames can be ejected through a plurality of outlets (41) at the edge of the handle (40), as indicated by the arrows.

Referring to FIG. 8, while the handle (40) is covered by the handle cover (50), the outlet (41) of the handle (40) is sealed or is not exposed to the outside, so that the flames can be blocked without being transmitted to the outside.

### [Explanation of Reference Numerals]

1, battery pack, 2: pressure valve, 10: pack body, 20: base cover, 21: hole, 22: central flow path, 23, 24, 25: branch flow paths, 30: pressure valve, 31: bottom member, 32: cap member, 33: porous membrane, 34: O-ring, 40: handle, 41: outlet, 42: fixing member, 50: handle cover

## Claims

1. A battery pack comprising:
a pack body;
a base cover disposed at one end of the pack body, and having a hole communicating with an inside of the pack body and a flow path connected to the hole;
a pressure valve disposed in the hole of the base cover; and
a handle disposed on the base cover to surround the pressure valve.

2. The battery pack according to claim 1, wherein
the flow path includes a central flow path disposed around the hole, and a plurality of branch flow paths extending from the central flow path to an edge of the base cover.

3. The battery pack according to claim 2, wherein
adjacent branch flow paths of the plurality of branch flow paths are spaced apart at a predetermined interval.

4. The battery pack according to claim 2, wherein
each branch flow path of the plurality of branch flow paths is arranged such that a cross-sectional area of each branch flow path increases along a direction from the central flow path toward the edge of the base cover.

5. The battery pack according to claim 2, wherein
the plurality of branch flow paths are disposed such that the predetermined interval between adjacent branch flow paths of the plurality of branch flow paths increases from the central flow path toward the edge of the base cover.

6. The battery pack according to claim 1, wherein
the flow path is in a groove shape on an upper surface of the base cover, an upper portion of the flow path is sealed by the base cover being covered by the handle, and an outlet for the flow path is formed at an edge of the handle.

7. The battery pack according to claim 6, further comprising
a handle cover disposed to surround the handle and the outlet.

8. The battery pack according to claim 1, wherein
the pressure valve includes a bottom member disposed in the hole, a cap member disposed above the bottom member, a porous membrane disposed between the bottom member and the cap member, and an O-ring disposed around a circumference of the bottom member.

9. A battery pack comprising:
a pack body;
a base cover mounted at one end of the pack body, and having a hole communicating with an inside of the pack body and a flow path connected to the hole;
a pressure valve disposed in the hole of the base cover and configured to open when a pressure inside the pack body is more than or equal to a predetermined pressure; and
a handle mounted on the base cover to surround the pressure valve and the flow path.

10. The battery pack according to claim 9, wherein
when the pressure valve opens, flames ejected toward the base cover are guided toward the flow path of the base cover.

11. A battery pack comprising:
a pack body;
a base cover mounted at one end of the pack body, and having a hole communicating with an inside of the pack body and a flow path connected to the hole;
a pressure valve disposed in the hole of the base cover and configured to open when a pressure inside the pack body is more than or equal to a predetermined pressure;
a handle surrounding the pressure valve, covering a partial region of the flow path, and forming an outlet of the flow path; and
a handle cover disposed to surround the handle and the outlet.
